# EUROPEAN PATENT APPLICATION

(11) **EP 4 844 936 A1**
(43) Date of publication of application: **25.11.2026**
(21) Application number: 25867188.2
(22) Date of filing: 06.08.2025
(51) Int. Cl.: H01M 50/559, H01M 50/184

(54) **PACKAGING ASSEMBLY, BATTERY CELL AND BATTERY PACK**

(30) Priority: 03.04.2025 CN 202510422834
(71) Applicant: HUIZHOU EVE POWER CO., LTD, Huizhou, Guangdong 516039 (CN)
(72) Inventor: Liu, Rongwei, Huizhou, Guangdong 516039 (CN); Liu, Yang, Huizhou, Guangdong 516039 (CN); Li, Renbing, Huizhou, Guangdong 516039 (CN); Yan, Bo, Huizhou, Guangdong 516039 (CN)
(74) Representative: Zhu, Puxing
(86) International application number: PCT/CN2025/113007
(87) International publication number: WO 2026/208053

(57) **Abstract**

The present disclosure provides a package assembly, a cell, and a battery pack. The package assembly includes an end plate, a terminal, and a sealing nail. The end plate is provided with a mounting through hole. The terminal includes a post and a first baffle connected to each other. The post is inserted through the mounting through hole. The first baffle is provided with an assembly hole. The assembly hole extends into the post. The sealing nail includes a rod portion and a second baffle connected to each other. One end of the rod portion is inserted into the assembly hole. An edge of the first baffle is disposed around the post. An edge of the second baffle extends toward the edge of the first baffle along a radial direction of the post.

## Description

This application claims priority to and the benefit of Chinese Patent Application No. 202510422834.X, filed on April 3, 2025. The disclosure of which is incorporated herein by reference in its entirety.

### TECHNICAL FIELD

The present disclosure relates to the field of battery technologies, and in particular, to a package assembly, a cell, and a battery pack.

### BACKGROUND

Conductive structures are important components for electrically connecting internal components and external components of cells (also referred to as battery cells or single batteries). One end of the conductive structure is connected to a circuit outside the battery cell. For example, the conductive structure is connected to a connection bar of a battery module. Another end of the conductive structure is connected to a circuit inside the battery cell. For example, the conductive structure is connected to a tab through a current collecting member, or the conductive structure is directly connected to the tab.

### SUMMARY

In the related art, reliability of the conductive structure is poor, resulting in poor reliability of the cell.

The present disclosure provides a package assembly, a cell, and a battery pack, to improve reliability of a conductive structure and improve reliability of the cell.

In a first aspect, the present disclosure provides a package assembly. The package assembly includes an end plate, a terminal, and a sealing nail. The end plate is provided with a mounting through hole. The terminal includes a post and a first baffle. One end of the post is connected to the first baffle, and another end of the post is inserted through the mounting through hole. An end of the first baffle away from the post is provided with an assembly hole. The assembly hole passes through the first baffle and extends into the post. The sealing nail includes a rod portion and a second baffle. One end of the rod portion is connected to the second baffle, and another end of the rod portion is inserted into the assembly hole. The second baffle is located on a side of the first baffle away from the end plate. An edge of the first baffle is disposed around the post, and an edge of the second baffle extends toward the edge of the first baffle along a radial direction of the post.

In a second aspect, the present disclosure provides a cell. The cell includes a package plate, an electrode assembly, and the fore-described package assembly. The package assembly and the package plate are covered with each other to define an accommodating cavity. The electrode assembly is disposed in the accommodating cavity. The electrode assembly is connected to an end of the post away from the second baffle.

In a third aspect, the present disclosure provides a battery pack. The battery pack includes a box body, a box cover, and the fore-described cell. The box body includes a mounting cavity. The box cover covers the box body. A plurality of cells are provided. The plurality of cells are disposed in the mounting cavity. The plurality of cells are electrically connected to each other.

### BENEFICIAL EFFECTS

In the present disclosure, the second baffle is provided and the edge of the second baffle extends to the edge of the first baffle. On one hand, a structural strength of the conductive structure composed of the terminal and the sealing nail at the first baffle may be increased to improve the deformation resistance of the conductive structure, thereby improving the sealing performance between the terminal and an outer casing. On another hand, the second baffle may be welded to the connection bar to increase a distance between a portion of the conductive structure welded to the connection bar and an upper plastic member, thereby effectively preventing the upper plastic member from being damaged due to a high welding temperature. In this way, the reliability of the cell may be improved.

### BRIEF DESCRIPTION OF THE DRAWINGS

FIG. 1 is a schematic view of a structure of a package assembly according to the embodiments of the present disclosure.
FIG. 2 is a schematic view of a structure of another package assembly according to the embodiments of the present disclosure.
FIG. 3 is a schematic view of fitting between a terminal and a sealing nail according to the embodiments of the present disclosure.
FIG. 4 is a schematic view of welding a sealing nail and a connection bar according to the embodiments of the present disclosure.
FIG. 5 is a schematic view of a structure of A in FIG. 3.
FIG. 6 is a schematic view of a structure of yet another package assembly according to the embodiments of the present disclosure.
FIG. 7 is a schematic enlarged view of a structure of B in FIG. 3.
FIG. 8 is a schematic view of a structure of a cell according to the embodiments of the present disclosure.
FIG. 9 is a schematic view of a structure of a battery pack according to the embodiments of the present disclosure.

Description of reference numbers are as follows:
01, package assembly;
11, end plate; 111, mounting through hole;
12, terminal; 121, post; 122, first baffle; 123, third baffle; 124, annular groove; 125, assembly hole;
13, sealing nail; 131, rod portion; 132, second baffle; 133, protruding ring;
14, welding mark; 15, first insulating member; 16, enclosure cylinder;
02, cell; 21, package plate; 22, electrode assembly; 23, positive tab; 24, accommodating cavity;
03, battery pack; 31, box body; 311, mounting cavity; 32, box cover; 33, connection bar.

### DETAILED DESCRIPTION

Before a package assembly, a cell, and a battery pack provided by embodiments of the present disclosure are described, related art of the present disclosure is first described.

In the related art, a cell includes an outer casing, an electrode assembly disposed in the outer casing, and a conductive structure inserted through the outer casing. The outer casing may be formed by a casing with one end open and an end cover covered with each other, or may be formed by a casing with opening at two ends and two end covers covering with each other. The cell may include one conductive structure. The conductive structure is inserted through the end cover. A positive tab is electrically connected to an end portion of the conductive structure located inside the outer casing. A negative tab is electrically connected to the casing. The cell may also include two conductive structures. Correspondingly, the two conductive structures may be disposed on a same end cover, or the two conductive structures may be respectively disposed on two end covers, or one conductive structure may be disposed on an end cover and the other conductive structure may be disposed at a closed end of the casing. In this case, end portions of the two conductive structures located inside the outer casing are electrically connected to the positive tab and the negative tab, respectively.

The conductive structure includes a terminal passing through the outer casing and a sealing nail welded to the terminal. In order to prevent the conductive structure from coming out of the outer casing, an end portion of the terminal located inside the outer casing is provided with an inner stopping edge. The inner stopping edge is in stopping fit with the outer casing. Accordingly, in order to prevent the conductive structure from falling into the outer casing, an end portion of the terminal located outside the outer casing is provided with an outer stopping edge. The outer stopping edge is in stopping fit with the outer casing. Correspondingly, an upper plastic member is provided between the outer stopping edge and the outer casing to insulate and isolate the conductive structure from the outer casing. A sealing ring is provided between the terminal and the outer casing to seal a portion of the outer casing fitting with the terminal. A lower plastic member is provided between the inner stopping edge and the outer casing to insulate and isolate the conductive structure from the outer casing.

During processes of manufacturing the cell, the end portion of the terminal located outside the outer casing is provided with an assembly hole, which is conducive to welding the terminal and the current collecting member into a whole outside the cell through a penetration welding process. After the welding of the terminal and the current collecting member is completed, in order to ensure the sealing performance of the terminal in an opening region and an overall structural strength of the terminal, a sealing nail needs to be welded in the assembly hole to seal the assembly hole and improve the overall structural strength of the terminal.

Since the outer stopping edge is a flanging structure formed by folding a part of a material of an outer end of the terminal, in order to ensure smooth folding and improve the flatness of the flanging structure, a thickness of the outer stopping edge should not be too large. Moreover, in order to ensure the firmness of the electrical connection between the cells, a weld penetration formed by welding the flanging structure with components such as the connection bar of the battery pack needs to be relatively deep. In this way, when the outer stopping edge is welded to the connection bar, the outer stopping edge is easily welded through, thereby damaging the upper plastic member and adversely affecting the sealing performance and the insulation and isolation performance between the terminal and the outer casing, and further reducing the reliability of the cell. Moreover, since the thickness of the outer stopping edge is relatively small, a strength of the conductive structure at the outer stopping edge is relatively small. In a case where an internal pressure of the cell increases, the sealing and fitting between the conductive structure and the outer casing is prone to failure. In this way, the reliability of the cell is relatively low.

In addition, an outer end surface of the sealing nail is located inside the assembly hole, i.e., the outer end surface of the sealing nail is lower than an outer end surface of the terminal, so that a portion of the conductive structure for welding to the connection bar is an annular end surface of the terminal disposed around the sealing nail, resulting in a relatively small welding area between the conductive structure and the connection bar, thereby resulting in poor welding reliability between the conductive structure and the connection bar, and adversely affecting the overcurrent reliability of the battery module.

Based on this, embodiments of the present disclosure provide a package assembly, a cell, and a battery pack, to increase a distance between an upper plastic member and a welding portion of a conductive structure welding to a connection bar, so as to prevent the upper plastic member from being damaged, and improve an overall strength of the conductive structure, thereby improving the sealing performance between the conductive structure and the outer casing. In this way, the reliability of the cell may be improved. In addition, a welding area between the conductive structure and the connection bar may be further increased, which is conducive to improving the welding reliability between the conductive structure and the connection bar, thereby improving the reliability of connection between cells to improve the overcurrent reliability of the battery module.

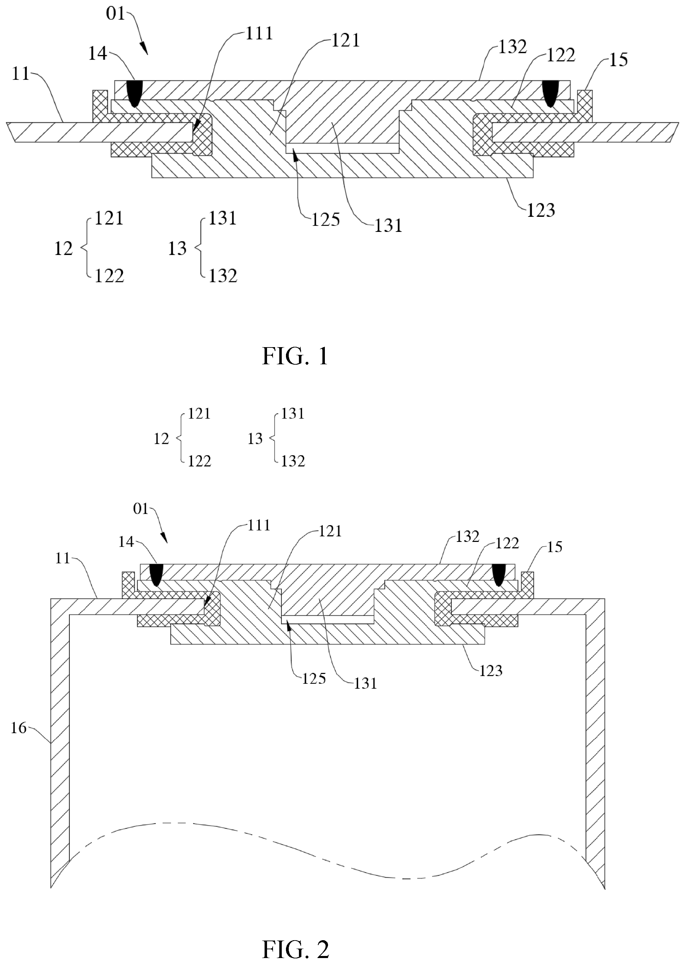

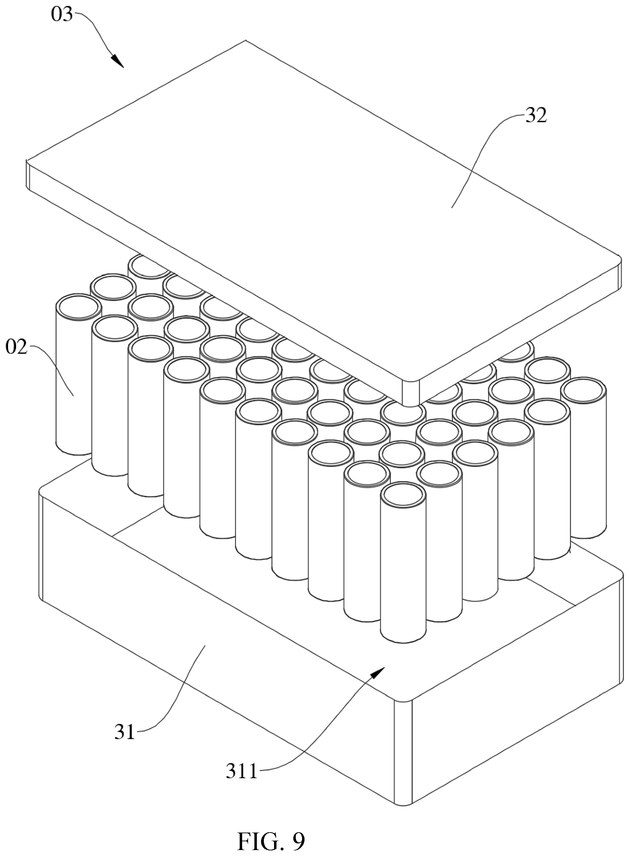

A package assembly 01, a battery cell 02, and a battery pack 03 provided by the embodiments of the present disclosure are described in detail below with reference to FIGs. 1 to 9.

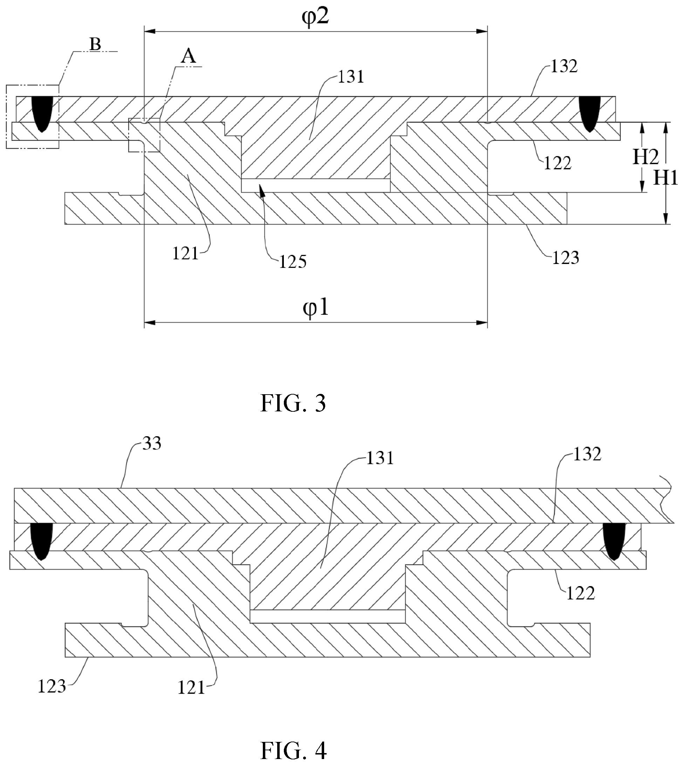

Referring to FIG. 1 or FIG. 2, FIG. 1 is a schematic view of a structure of a package assembly 01 according to the embodiments of the present disclosure. FIG. 2 is a schematic view of a structure of another package assembly 01 according to the embodiments of the present disclosure. In a first aspect, the embodiments of the present disclosure provide a package assembly 01. The package assembly 01 includes an end plate 11, a terminal 12, and a sealing nail 13. The end plate 11 is provided with a mounting through hole 111. The terminal 12 includes a post 121 and a first baffle 122. One end of the post 121 is connected to the first baffle 122, and another end of the post 121 is inserted through the mounting through hole 111. An end of the first baffle 122 away from the post 121 is provided with an assembly hole 125. The assembly hole 125 passes through the first baffle 122 and extends into the post 121. The sealing nail 13 includes a rod portion 131 and a second baffle 132. One end of the rod portion 131 is connected to the second baffle 132, and another end is inserted into the assembly hole 125. The second baffle 132 is located on a side of the first baffle 122 away from the end plate 11. An edge of the first baffle 122 is disposed around the post 121. An edge of the second baffle 132 extends toward the edge of the first baffle 122 along a radial direction of the rod portion 131. As shown in FIG. 3, FIG. 3 is a schematic view of fitting between the terminal 12 and the sealing nail 13 according to the embodiments of the present disclosure.

It may be understood that the package assembly 01 is configured to package an electrode, an electrolyte, etc., inside the cell 02, to prevent external environmental factors from affecting internal components of the cell 02, and further prevent leakage of substances inside the cell 02.

It may be understood that the end plate 11 may be a cover plate of the cell 02, as shown in FIG. 1. The end plate 11 may be a closed end of a casing of the cell 02, as shown in FIG. 2.

A surface of the second baffle 132 away from the first baffle 122 is configured to be welded to a connection bar 33, as shown in FIG. 4, and FIG. 4 is a schematic view of welding the sealing nail 13 and the connection bar 33 according to the embodiments of the present disclosure.

Specifically, one end of the post 121 is perpendicularly connected to the first baffle 122. One end of the rod portion 131 is perpendicularly connected to the second baffle 132, and another end is inserted into the assembly hole 125. Exemplarily, the first baffle 122 extends along a circumferential direction of the post 121 to form as an annular plate. The second baffle 132 extends along a circumferential direction of the rod portion 131 to form an annular plate.

Specifically, the assembly hole 125 extends along an axial direction of the post 121.

It may be understood that the package assembly 01 further includes a plastic member, and the plastic member is configured to insulate and isolate the first baffle 122 from the end plate 11.

It may be understood that the second baffle 132 may be connected to the first baffle 122 in at least one of the following manners: welding, riveting, abutting, or clamping.

It may be understood that at least one welding portion is provided between the sealing nail 13 and the terminal 12. In a case where one welding portion is provided, the first baffle 122 is welded to the second baffle 132, so that the assembly hole 125 may be sealed, and the edge where the terminal 12 and sealing nail 13 fit together is connected as a whole, thereby improving the integrity of the conductive structure.

Exemplarily, the first baffle 122 may be formed with the post 121 by folding. The first baffle 122 may also be welded to the post 121. The first baffle 122 may also be integrally formed with the post 121 by casting.

Exemplarily, the second baffle 132 may be welded to the rod portion 131. The second baffle 132 may also be formed by means of pier pressing. The second baffle 132 may also be integrally formed with the post 121 by means of casting.

In this embodiment, the second baffle 132 is provided and the edge of the second baffle 132 extends to the edge of the first baffle 122. On one hand, a structural strength of the conductive structure composed of the terminal 12 and the sealing nail 13 at the first baffle 122 may be increased to improve the deformation resistance of the conductive structure, thereby improving the sealing performance between the terminal 12 and an outer casing. On another hand, the second baffle 132 may be welded to the connection bar 33 to increase a distance between a portion of the conductive structure welded to the connection bar 33 and an upper plastic member, thereby effectively preventing the upper plastic member from being damaged due to a high welding temperature. In this way, the reliability of the cell 02 may be improved.

Referring to FIG. 1 and FIG. 3, in an embodiment, the terminal 12 further includes a third baffle 123. The third baffle 123 is located on a side of the end plate 11 away from the first baffle 122. The third baffle 123 is connected to an end of the post 121 away from the first baffle 122. In this way, the terminal 12 may be in stopping fit with the end plate 11 in two directions through the first baffle 122 and the third baffle 123, so that the conductive structure may be prevented from falling into the outer casing under the limitation of the first baffle 122, and the conductive structure may be prevented from falling out of the outer casing under the limitation of the third baffle 123. In this way, the reliability of the cell 02 may be improved.

In an embodiment, the first baffle 122 is formed in a bending shape.

In other embodiments, the first baffle 122 is welded to the post 121.

It may be understood that compared with the method of fixing the first baffle 122 on the post 121 by welding, the method of forming by bending may simplify forming steps of the first baffle 122, so as to improve the forming efficiency, and avoid defects such as false welding and welding through caused by the welding process.

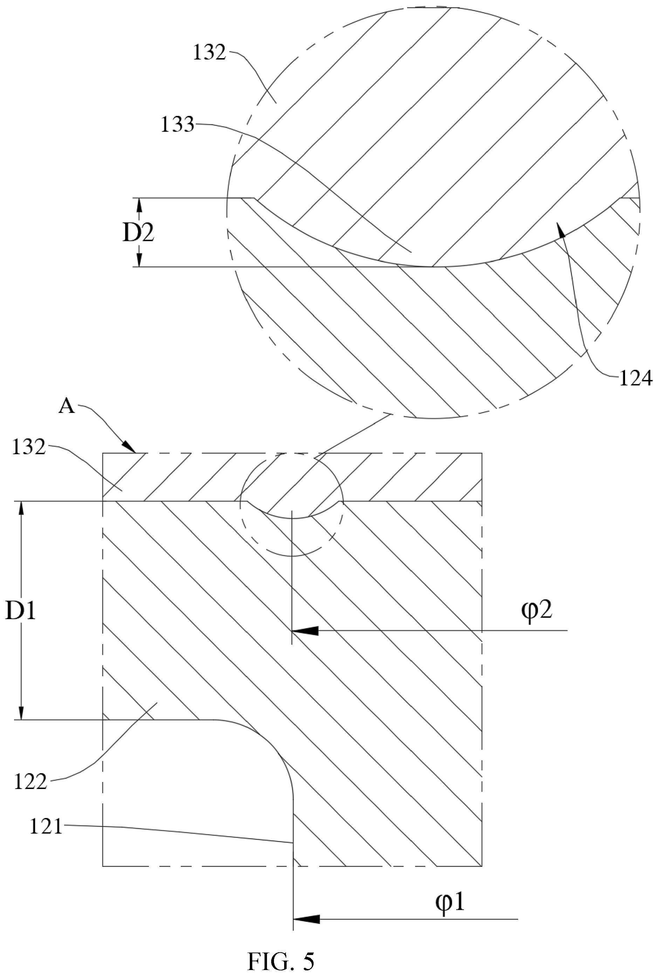

Referring to FIG. 3 and FIG. 5, FIG. 5 is a schematic view of a structure of A in FIG. 3. In an embodiment, a surface of the first baffle 122 away from the end plate 11 is provided with an annular groove 124, and the annular groove 124 extends along a circumferential direction of the terminal 12.

It may be understood that when the first baffle 122 is formed by bending through a flanging process, a portion of the first baffle 122 close to an outer periphery will rebound upward, resulting in poor flatness of the first baffle 122.

Based on this, in this embodiment, the annular groove 124 is provided to provide a place for releasing stress in advance for the first baffle 122 during the bending process, thereby effectively reducing an amplitude of the first baffle 122 rebounding upward to improve the flatness of the first baffle 122.

Referring to FIG. 3 and FIG. 5, in an embodiment, a surface of the second baffle 132 facing the first baffle 122 is provided with a protruding ring 133. The protruding ring 133 is inserted into the annular groove 124. In this way, a fitting area between the first baffle 122 and the second baffle 132 may be increased, so that the fitting reliability between the terminal 12 and the sealing nail 13 may be improved. Furthermore, the fitting between the sealing nail 13 and the terminal 12 may be positioned through the fitting between the protruding ring 133 and the annular groove 124, so as to improve the accuracy of a relative position between the sealing nail 13 and the terminal 12.

In an embodiment, along an axial direction of the terminal 12, a thickness dimension of the first baffle 122 is D1, a depth dimension of the annular groove 124 is D2, and D1 and D2 satisfy: 0<D2≤0.4D1.

It may be understood that the depth dimension D2 of the annular groove 124 includes, but is not limited to, 0.01D1, 0.02D1, 0.03D1, 0.04D1, 0.08D1, 0.10D1, 0.11D1, 0.12D1, 0.13D1, 0.16D1, 0.17D1, 0.18D1, 0.19D1, 0.20D1, 0.22D1, 0.23D1, 0.24D1, 0.25D1, 0.28D1, 0.30D1, 0.31D1, 0.32D1, 0.33D1, 0.34D1, 0.36D1, 0.37D1, 0.38D1, 0.39D1, and 0.4D1.

In this embodiment, through above-described limitations, a strength of the first baffle 122 maybe prevented from being affected by the excessive depth dimension D2 of the annular groove 124, so that a structural strength of the terminal 12 may be ensured to prevent the terminal 12 from being deformed, thereby improving the sealing performance between the terminal 12 and the end plate 11.

In an embodiment, a diameter of the post 121 is φ1, a diameter of a middle ring line of the annular groove 124 is φ2, and φ1 and φ2 satisfy: φ2≤φ1. In this way, during the bending process of the first baffle 122, the extrusion of a connection portion between the first baffle 122 and the post 121 on a side away from the second baffle 132 toward the axial direction of the terminal 12 may be effectively alleviated, so as to ensure a size of the fitting hole, which is conducive to the smooth installation of the sealing nail 13 subsequently.

The middle ring line of the annular groove 124 is a ring line corresponding to half of a sum of an inner diameter and an outer diameter of the annular groove 124.

Referring to FIG. 5, in an embodiment, an inner wall of the annular groove 124 is recessed inward to form an arc-shaped surface. In this way, stress concentration in the annular groove 124 may be reduced, and a stress state of the terminal 12 may be improved, thereby improving the reliability of the package assembly 01.

Referring to FIG. 3, in an embodiment, an outer diameter of the first baffle 122 is A1, an outer diameter of the second baffle 132 is A2, and A1 and A2 satisfy: 0.8A1≤A2≤1.2A1.

It may be understood that the outer diameter of the second baffle 132 includes, but is not limited to, 0.8A1, 0.81A1, 0.82A1, 0.83A1, 0.84A1, 0.85A1, 0.86A1, 0.87A1, 0.88A1, 0.89A1, 0.9A1, 0.91A1, 0.92A1, 0.93A1, 0.94A1, 0.95A1, 0.96A1, 0.97A1, 0.98A1, 0.99A1, A1, 1.02A1, 1.04A1, 1.06A1, 1.08A1, 1.10A1, 1.12A1, 1.14A1, 1.16A1, 1.18A1, and 1.2A1.

In this embodiment, through above-described limitations, on one hand, the second baffle 132 may have a relatively large welding area with the connection bar 33, thereby improving the reliability of welding the second baffle 132 to the connection bar 33. On another hand, a size of the second baffle 132 may be controlled to prevent the material cost from increasing due to the excessive outer diameter of the second baffle 132, and the influence of the second baffle 132 on the layout of other components may be reduced.

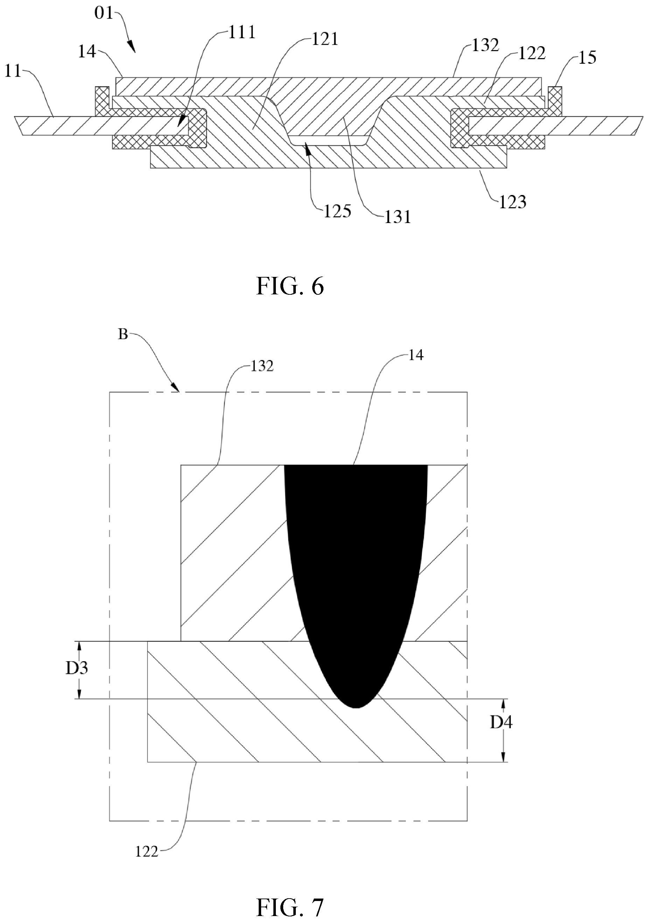

Referring to FIG. 6, FIG. 6 is a schematic view of a structure of yet another package assembly 01 according to the embodiments of the present disclosure. In an embodiment, the assembly hole 125 is a tapered hole. A small-diameter end of the assembly hole 125 is away from the first baffle 122 than a large-diameter end of the assembly hole 125. An outer peripheral surface of the rod portion 131 is fitted snugly against a hole wall of the assembly hole 125.

It may be understood that when the assembly hole 125 is an equal-diameter hole, if there is a large deviation between the diameter of the rod portion 131 and the diameter of the assembly hole 125, the coaxiality of the sealing nail 13 and the terminal 12 will be greatly different.

Based on this, in this embodiment, the assembly hole 125 is defined as a tapered hole, and the self-centering function of the tapered hole may be used, so that the sealing nail 13 and the assembly hole 125 may more easily achieve a relatively high coaxiality. Specifically, during the process of assembling the sealing nail 13 and the terminal 12, a taper of the tapered hole is used to generate a radial force when the rod portion 131 of the sealing nail 13 is in contact with the hole wall of the assembly hole 125. The sealing nail 13 moves automatically toward an axis of the assembly hole 125 by this force.

Referring to FIG. 6, in an embodiment, an included angle α is formed between the hole wall of the assembly hole 125 and the axis of the assembly hole 125, and α satisfies: 0°<α≤30°.

It may be understood that the included angle α includes, but is not limited to, 0.10°, 0.20°, 0.30°, 0.40°, 0.50°, 0.60°, 0.70°, 0.80°, 0.90°, 1.00°, 2.00°, 4.00°, 6.00°, 8.00°, 10.00°, 12.00°, 14.00°, 16.00°, 18.00°, 20.00°, 22.00°, 24.00°, 26.00°, 28.00°, 29.00°, 29.10°, 29.20°, 29.30°, 29.40°, and 30°.

In this embodiment, by defining the included angle α, on one hand, the assembly hole 125 may be a tapered hole, so that the coaxiality of the sealing nail 13 and the assembly hole 125 may be improved. On another hand, it can prevent the orifice size of the avoidable assembly hole 125 from being too large, which would affect the arrangement of other structures (for example, the annular groove 124).

Referring to FIG. 1 or FIG. 3, in an embodiment, the first baffle 122 is welded to the second baffle 132. In this way, a metal material of the first baffle 122 and a metal material of the second baffle 132 may be combined at an atomic level to improve the reliability and stability of the combination between the terminal 12 and the sealing nail 13, and the seamless connection between the first baffle 122 and the second baffle 132 may be achieved to effectively ensure the sealing performance of the fitting hole. In this way, the reliability of the cell 02 may be improved.

It may be understood that a weld penetration of a welding mark 14 formed on the first baffle 122 is less than a weld penetration formed by directly welding the first baffle 122 to components such as the connection bar 33 of the battery pack 03 in the related art. Therefore, when the first baffle 122 and the second baffle 132 are welded, the welding has little thermal impact on other components.

Referring to FIG. 7, FIG. 7 is a schematic enlarged view of a structure of B in FIG. 3. In an embodiment, the weld penetration of the welding mark 14 formed on the first baffle 122 is D3, and D3 satisfies: D3≥0.2 mm. In this way, the welding mark 14 formed by welding between the first baffle 122 and the second baffle 132 has a sufficient depth dimension, so as to ensure the reliability of welding between the first baffle 122 and the second baffle 132.

Referring to FIG. 7, a distance between the welding mark 14 and a surface of the first baffle 122 away from the second baffle 132 is D4, and D4 is greater than or equal to 0.15 mm. In this way, the heat influence of the welding between the first baffle 122 and the second baffle 132 on the plastic member may be reduced, thereby improving the sealing performance of a fitting portion between a pole and the end plate 11.

Referring to FIG. 3, in an embodiment, a diameter of the post 121 is φ1, a diameter of the assembly hole 125 is φ3, and φ1 and φ3 satisfy: 0.5 mm≤φ3≤0.8φ1.

In an embodiment, a height dimension of the terminal 12 is H1, a depth dimension of the assembly hole 125 is H2, and H1 and H2 satisfy: 0.5H1≤H2≤0.9H1.

It may be understood that the depth dimension H2 of the assembly hole 125 includes, but is not limited to, 0.5H1, 0.51H1, 0.52H1, 0.53H1, 0.54H1, 0.55H1, 0.56H1, 0.57H1, 0.58H1, 0.59H1, 0.60H1, 0.61H1, 0.62H1, 0.63H1, 0.64H1, 0.65H1, 0.66H1, 0.67H1, 0.68H1, 0.69H1, 0.70H1, 0.71H1, 0.72H1, 0.73H1, 0.74H1, 0.75H1, 0.76H1, 0.77H1, 0.78H1, 0.79H1, 0.8H1, 0.82H1, 0.83H1, 0.84H1, 0.85H1, 0.86H1, 0.87H1, 0.88H1, 0.89H1, and 0.9H1.

In this embodiment, through above-described limitations, on one hand, the sealing nail 13 and the assembly hole 125 may have a sufficient fitting size, so as to improve the reliability of the fitting between the sealing nail 13 and the terminal 12. On another hand, the terminal 12 may be prevented from having a low strength at a bottom of the assembly hole 125 due to the excessive fitting size. In this way, the reliability of the connection between the terminal 12 and the sealing nail 13 may be improved, which is conducive to improving the reliability of the cell 02.

Referring to FIG. 1, in an embodiment, the package assembly 01 further includes a first insulating member 15. The first insulating member 15 is disposed between the first baffle 122 and the end plate 11. In this way, the terminal 12 may be insulated and isolated from the end plate 11.

Exemplarily, the first insulating member 15 may be a plastic member.

As shown in FIG. 2, in an embodiment, the package assembly 01 further includes an enclosure cylinder 16. The end plate 11 is connected to the enclosure cylinder 16 and closes an opening at one end of the enclosure cylinder 16. It may be understood that when the package assembly 01 is applied to the cell 02, component substances inside the cell 02 are packaged in cooperation with the cover plate.

As shown in FIG. 2, in an embodiment, the enclosure cylinder 16 and the end plate 11 are integrally formed. In this way, weak links such as connection points or welding seams may be avoided, which is conducive to improving the strength of the package assembly 01, so that the package assembly 01 may withstand external forces more uniformly, and deformation can be avoided under loads such as impact and vibration.

In an embodiment, the enclosure cylinder 16 is welded to the end plate 11. In this way, after the components such as the terminal 12 are mounted on the end plate 11, the end plate 11 is welded to the enclosure cylinder 16, which is conducive to improving easy operability of assembling the components such as the terminal 12 and the end plate 11.

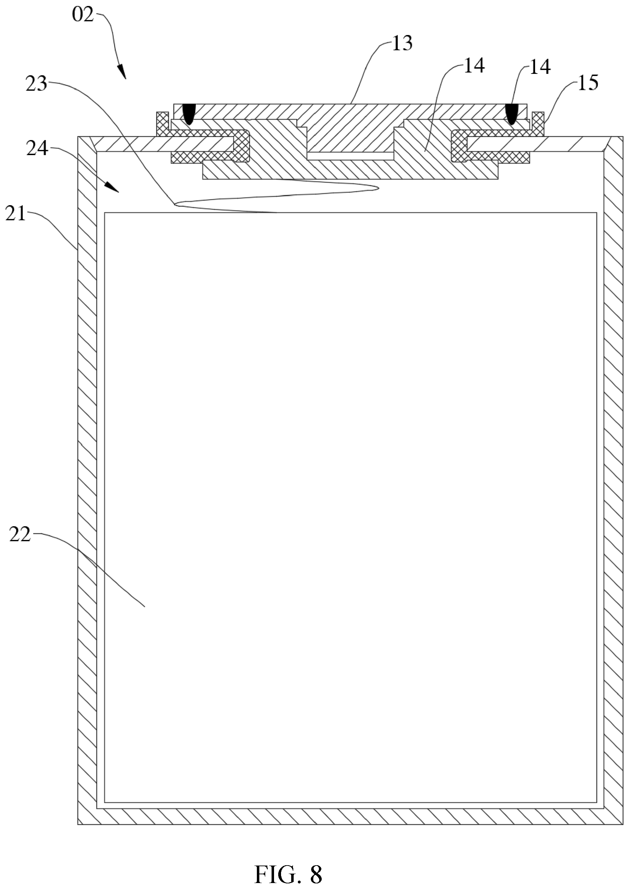

Referring to FIG. 8, FIG. 8 is a schematic view of a structure of a cell 02 according to the embodiments of the present disclosure. In a second aspect, the embodiments of the present disclosure provide a cell 02. The cell 02 includes a package plate 21, an electrode assembly 22, and the package assembly 01 provided by some embodiments of the present disclosure. The package assembly 01 and the package plate 21 are covered with each other to define an accommodating cavity 24. The electrode assembly 22 is disposed in the accommodating cavity 24. The electrode assembly 22 is connected to an end of the post 121 away from the second baffle 132.

It may be understood that the electrode assembly 22 includes a positive plate, a separator, and a negative plate sequentially stacked. The positive plate may be connected to the terminal 12 through a positive tab 23. The negative plate may be connected to the package plate 21 or the end plate 11 through a negative tab.

In a case where the end plate 11 is a cover plate, the package plate 21 is a casing with one end open and the other end closed. The end plate 11 is connected to the open end of the casing and closes the casing accommodating cavity 24.

In a case where the end plate 11 is the closed end of the casing, the package assembly 01 further includes an enclosure cylinder 16, and the package plate 21 is a cover plate. The package plate 21 and the end plate 11 are respectively located at two ends of the enclosure cylinder 16 to close the accommodating cavity 24. In this case, components such as the terminal 12 and the sealing nail 13 provided by the embodiments of the present disclosure may also be mounted on the package plate 21.

It may be understood that the cell 02 includes the package assembly 01 provided by some embodiments of the present disclosure. The cell 02 has all beneficial effects of the package assembly 01, and details are not described herein again.

In a third aspect, the embodiments of the present disclosure further provide a battery pack 03. The battery pack 03 includes a box body 31, a box cover 32, and a cell 02 provided by some embodiments of the present disclosure. The box body 31 has a mounting cavity 311. The box cover 32 covers the box body 31. A plurality of cells 02 are provided. The plurality of cells 02 are disposed in the mounting cavity 311. The plurality of cells 02 are electrically connected with each other.

The battery pack 03 further includes a plurality of connection bars 33. Adjacent two of the cells 02 are electrically connected through the connection bars 33. Specifically, an end portion of the connection bar 33 is connected to the second baffle 132.

It may be understood that the battery pack 03 may further include components such as a power manager.

It may be understood that the battery pack 03 includes the cell 02 provided by some embodiments of the present disclosure. The battery pack 03 has all beneficial effects of the cell 02, and details are not described herein again.

## Claims

1. A package assembly (01), comprising:
an end plate (11) provided with a mounting through hole (111);
a terminal (12) comprising a post (121) and a first baffle (122), wherein one end of the post (121) is connected to the first baffle (122), another end of the post (121) is inserted through the mounting through hole (111), an end of the first baffle (122) away from the post (121) is provided with an assembly hole (125), and the assembly hole (125) passes through the first baffle (122) and extends into the post (121); and
a sealing nail (13) comprising a rod portion (131) and a second baffle (132), wherein one end of the rod portion (131) is connected to the second baffle (132), another end of the rod portion (131) is inserted into the assembly hole (125), and the second baffle (132) is located on a side of the first baffle (122) away from the end plate (11);
wherein an edge of the first baffle (122) is disposed around the post (121), and an edge of the second baffle (132) extends toward the edge of the first baffle (122) along a radial direction of the post (121).

2. The package assembly (01) according to claim 1, wherein the terminal (12) further comprises a third baffle (123), the third baffle (123) is located on a side of the end plate (11) away from the first baffle (122), and the third baffle (123) is connected to an end of the post (121) away from the first baffle (122).

3. The package assembly (01) according to claim 2, wherein the first baffle (122) is formed in a bending shape.

4. The package assembly (01) according to claim 3, wherein a surface of the first baffle (122) away from the end plate (11) is provided with an annular groove (124), and the annular groove (124) extends along a circumferential direction of the terminal (12).

5. The package assembly (01) according to claim 4, wherein a surface of the second baffle (132) facing the first baffle (122) is provided with a protruding ring (133), and the protruding ring (133) is inserted into the annular groove (124).

6. The package assembly (01) according to claim 4 or 5, wherein along an axial direction of the terminal (12), a thickness dimension of the first baffle (122) is D1, a depth dimension of the annular groove (124) is D2, and D1 and D2 satisfy: 0<D2≤0.4D1.

7. The package assembly (01) according to any one of claims 4 to 6, wherein a diameter of the post (121) is φ1, a diameter of a middle ring line of the annular groove (124) is φ2, and φ1 and φ2 satisfy: φ2≤φ1.

8. The package assembly (01) according to any one of claims 4 to 7, wherein an inner wall of the annular groove (124) is recessed inward to form an arc-shaped surface.

9. The package assembly (01) according to any one of claims 1 to 8, wherein an outer diameter of the first baffle (122) is A1, an outer diameter of the second baffle (132) is A2, and A1 and A2 satisfy: 0.8A1≤A2≤1.2A1.

10. The package assembly (01) according to any one of claims 1 to 9, wherein the assembly hole (125) is a tapered hole, a small-diameter end of the assembly hole (125) is away from the first baffle (122) than a large-diameter end of the assembly hole (125), and an outer peripheral surface of the rod portion (131) is fitted snugly against a hole wall of the assembly hole (125).

11. The package assembly (01) according to claim 10, wherein an included angle α is formed between the hole wall of the assembly hole (125) and an axis of the assembly hole (125), and α satisfies: 0°<α≤30°.

12. The package assembly (01) according to any one of claims 1 to 11, wherein the first baffle (122) is welded to the second baffle (132).

13. The package assembly (01) according to claim 12, wherein a weld penetration of a welding mark (14) formed on the first baffle (122) is D3, and D3 satisfies: D3≥0.2 mm; and/or
wherein a distance between the welding mark (14) and a surface of the first baffle (122) away from the second baffle (132) is D4, and D4 satisfies: D4≥0.15 mm.

14. The package assembly (01) according to any one of claims 1 to 13, wherein a diameter of the post (121) is φ1, a diameter of the assembly hole (125) is φ3, and φ1 and φ3 satisfy: 0.5 mm≤φ3≤0.8φ1.

15. The package assembly (01) according to any one of claims 1 to 14, wherein a height dimension of the terminal (12) is H1, a depth dimension of the assembly hole (125) is H2, and H1 and H2 satisfy: 0.5H1≤H2≤0.9H1.

16. The package assembly (01) according to any one of claims 1 to 15, wherein the package assembly (01) further comprises a first insulating member (15), and the first insulating member (15) is disposed between the first baffle (122) and the end plate (11).

17. The package assembly (01) according to any one of claims 1 to 16, wherein the package assembly (01) further comprises an enclosure cylinder (16), and the end plate (11) is connected to the enclosure cylinder (16) and closes an opening at one end of the enclosure cylinder (16).

18. The package assembly (01) according to claim 17, wherein the enclosure cylinder (16) and the end plate (11) are integrally formed, or the enclosure cylinder (16) is welded to the end plate (11).

19. A cell (02), comprising:
a package plate (21);
an electrode assembly (22); and
the package assembly (01) according to any one of claims 1 to 18, wherein the package assembly (01) and the package plate (21) are covered with each other to define an accommodating cavity (24), the electrode assembly (22) is disposed in the accommodating cavity (24), and the electrode assembly (22) is connected to an end of the post (121) away from the second baffle (132).

20. A battery pack (03), comprising:
a box body (31) comprising a mounting cavity (311);
a box cover (32) covering the box body (31); and
the cell (02) according to claim 19, wherein a plurality of cells (02) are provided, the plurality of cells (02) are disposed in the mounting cavity (311), and the plurality of cells (02) are electrically connected to each other.
